# EUROPEAN PATENT APPLICATION

(11) **EP 4 603 930 A2**
(43) Veröffentlichungstag der Anmeldung: **20.08.2025**
(21) Anmeldenummer: 25157566.8
(22) Anmeldetag: 13.02.2025
(51) Int. Cl.: G05B 19/409, B23Q 17/00, B27C 5/06

(54) **BEARBEITUNGSMASCHINE UND SPANNMITTEL MIT ELEKTRONISCHER INFORMATIONSANZEIGE**

(30) Priorität: 16.02.2024 DE 102024104383
(71) Anmelder: Homag Bohrsysteme GmbH, 33442 Herzebrock-Clarholz (DE)
(72) Erfinder: Pannwitz, Joachim, 32760 Detmold (DE); Amann, Bernd, 32429 Minden (DE); Frey, Jochen, 72178 Waldachtal (DE); Schwarz, Tobias, 26316 Varel (DE)
(74) Vertreter: Hoffmann Eitle

(57) **Zusammenfassung**

Die Anmeldung betrifft eine Bearbeitungsmaschine (10) zum Bearbeiten von Werkstücken (12), die bevorzugt zumindest teilweise aus Holz, Holzwerkstoffen, Kunststoff oder dergleichen bestehen, umfassend eine Werkstückauflage (14), die eingerichtet ist ein Werkstück (12) aufzunehmen, eine elektronische Steuerung (16) die eingerichtet ist die Bearbeitungsmaschine (10) zu steuern, zumindest eine elektronische Informationsanzeige (18), die eingerichtet ist mit der elektronischen Steuerung (16) zu kommunizieren und Informationen in Form von Texten und/oder Grafiken anzuzeigen, und zumindest eine Interaktionsstelle, an der ein manueller Prozessschritt erforderlich ist, wobei sich die elektronische Informationsanzeige (18) an oder in unmittelbarer Nähe der Interaktionsstelle befindet. Die Anmeldung betrifft ferner ein Spannmittel (20) zur Verwendung in einer Bearbeitungsmaschine (10) zum Bearbeiten von Werkstücken (12), die bevorzugt zumindest teilweise aus Holz, Holzwerkstoffen, Kunststoff oder dergleichen bestehen, die Bearbeitungsmaschine (10) umfassend eine Werkstückauflage (14), die eingerichtet ist ein Werkstück (12) und das Spannmittel (20) aufzunehmen, und eine elektronische Steuerung (16), wobei das Spannmittel (20) eine elektronische Informationsanzeige (18) umfasst, die eingerichtet ist mit der elektronischen Steuerung (16) der Bearbeitungsmaschine (10) zu kommunizieren und insbesondere Informationen in Form von Texten und/oder Grafiken anzuzeigen. Die Anmeldung betrifft ferner ein System umfassend die Bearbeitungsmaschine (10) und das Spannmittel (20).

## Beschreibung

### Technisches Gebiet

Die Erfindung betrifft eine Bearbeitungsmaschine zum Bearbeiten von Werkstücken, die bevorzugt zumindest teilweise aus Holz, Holzwerkstoffen, Kunststoff oder dergleichen bestehen, eine Spannvorrichtung für eine solche Bearbeitungsmaschine sowie ein System umfassend eine Bearbeitungsmaschine und ein Spannmittel.

### Stand der Technik

Durch den demographischen Wandel fällt es immer schwerer geeignete Mitarbeiter zur Bedienung von Maschinen zu finden. Eine Vereinfachung der Bedienung ist daher ein wesentlicher Faktor beim Verkauf von Neumaschinen sowie bei der Entlastung des Aftersale-Service.

Auch wenn moderne Bearbeitungsmaschinen bereits einen hohen Automatisierungsgrad aufweisen, sind für den Betrieb und die Wartung der Maschinen immer noch manuelle Interaktionen erforderlich, wie zum Beispiel die Schmierung beweglicher Komponenten, das Werkzeugmanagement oder die Installation von Spannvorrichtungen, welche in der Regel ein hohes Maß an Fachkenntnis und Erfahrung erfordern.

In den genannten Beispielen muss der Bediener beispielsweise wissen, wann die letzte Schmierung erfolgte, wann die nächste Schmierung erfolgen muss und welche Menge Schmiermittel erforderlich ist, welcher Werkzeugplatz belegt ist, welches Werkzeug darin enthalten ist und ob ein Werkzeug entnommen oder eingelegt werden muss, bzw. welches Spannmittel benötigt wird, an welcher Stelle es platziert werden muss und in welchem Winkel es ausgerichtet werden muss.

Somit besteht das Problem, die manuellen Interaktionen durch Bereitstellung von Informationen zu vereinfachen, um die Anforderungen an das Bedienpersonal zu reduzieren, mögliche Bedienfehler zu vermeiden sowie die Qualität und Effizienz von Produktions- bzw. Wartungsprozessen zu verbessern.

Zur Lösung der genannten Probleme sind zentral angeordnete Bedienterminals mit elektronischen Anzeigen bekannt, die bei Bedarf alle Informationen zum Maschinenzustand oder zu einem Produktions- oder Wartungsprozess automatisiert anzeigen können. Dabei besteht jedoch der Nachteil, dass sich diese Anzeigen nicht in der Nähe der Interaktionsstellen befinden, an denen die manuellen Prozessschritte durchgeführt werden müssen, so dass sich der Bediener die benötigten Informationen merken oder notieren muss, bevor er den entsprechenden manuellen Prozessschritt ausführen kann, was mühsam, ineffizient und fehleranfällig ist.

Daneben sind LED-Systeme bekannt, die direkt an den jeweiligen Interaktionsstellen installiert sind und durch eine Kodierung (an/aus, Farbe, Blinkfrequenz etc.) bestimmte Informationen anzeigen können. So kann beispielsweise die Art eines benötigten Spannmittels und dessen Position auf einer Werkstückauflage anhand einer LED-Leiste angezeigt werden, die seitlich an der Werkstückauflage installiert ist. Sollen weitere Informationen angezeigt werden (wie z.B. die Größe des Werkstücks oder die Ausrichtung des Spannmittels auf der Werkstückauflage), wird das System jedoch schwer verständlich und überladen, da der Bediener die verschiedenen Kodierungen kennen oder nachlesen muss, was ebenfalls mühsam, ineffizient und fehleranfällig ist. Zudem ist die Positionsgenauigkeit der Anzeige aufgrund der relativ großen Abstände zwischen den LEDs der LED-Leiste auf mehrere Millimeter begrenzt.

Ferner besteht das Problem, dass der Bediener vor Entnahme eines Spannmittels aus einem Lager, Magazin oder Ähnlichem wissen muss, welches Spannmittel benötigt wird, so dass er sich diese Information merken oder notieren muss, was ebenfalls mühsam, ineffizient und fehleranfällig ist.

### Darstellung der Erfindung

Der vorliegenden Erfindung liegt somit die Aufgabe zugrunde, den Bediener bei der Maschinenbedienung zu unterstützen, indem alle für eine manuelle Interaktion benötigten Informationen in einer leicht verständlichen Art und Weise direkt an der Interaktionsstelle bereitgestellt werden.

Eine erfindungsgemäße Bearbeitungsmaschine ist in Anspruch 1 definiert. Ein erfindungsgemäßes Spannmittel ist in Anspruch 7 definiert. Ein erfindungsgemäßes System ist in Anspruch 15 definiert. Die Unteransprüche beziehen sich auf bestimmte Ausführungsformen.

Eine erfindungsgemäße Bearbeitungsmaschine zum Bearbeiten von Werkstücken, die bevorzugt zumindest teilweise aus Holz, Holzwerkstoffen, Kunststoff oder dergleichen bestehen, umfasst eine Werkstückauflage, die eingerichtet ist ein Werkstück aufzunehmen, eine elektronische Steuerung die eingerichtet ist die Bearbeitungsmaschine zu steuern, zumindest eine elektronische Informationsanzeige, insbesondere ein Display, die eingerichtet ist mit der elektronischen Steuerung zu kommunizieren und Informationen in Form von Texten und/oder Grafiken anzuzeigen, und zumindest eine Interaktionsstelle, an der ein manueller Prozessschritt erforderlich ist, wobei sich die elektronische Informationsanzeige an oder in unmittelbarer Nähe der Interaktionsstelle befindet.

Die erfindungsgemäße Bearbeitungsmaschine hat den Vorteil, dass die richtigen Informationen in der richtigen Form zur richtigen Zeit am richtigen Ort angezeigt werden können: Durch die elektronische Informationsanzeige, die mit der Maschinensteuerung kommuniziert, können selektiv die aktuell für einen Prozessschritt benötigten Informationen angezeigt werden, während aktuell nicht benötigte Informationen nicht angezeigt werden. Somit muss der Bediener die aktuell benötigten Informationen nicht aus einer großen Menge von Informationen heraussuchen. Durch die Bereitstellung der Informationsanzeige direkt an der Interaktionsstelle können die Informationen zudem dort angezeigt werden, wo sie aktuell benötigt werden. Im Gegensatz zu einer Maschine, bei der die Informationen auf einem zentral angeordneten Bedienterminal angezeigt werden, muss sich der Bediener die Informationen nicht merken oder notieren, bevor er einen manuellen Prozessschritt an anderer Stelle ausführen kann. Durch die Anzeige der Informationen in Text- oder Grafikform können zudem mehr Informationen auf eine leichter verständliche Weise angezeigt werden als bei den eingangs beschrieben Lösungen, bei denen die angezeigten Informationen zunächst vom Bediener dekodiert werden müssen. Die Verwendung eines Displays hat zudem den Vorteil, dass die Auflösung wesentlich höher ist als bei einer LED-Leiste (in der Regel < 1mm), so dass z.B. die Position eines zu installierenden Spannmittels sehr viel genauer angezeigt werden kann. Alle oben genannten Effekte haben den Vorteil, dass der Bediener entlastet, Zeit gespart und Bedienfehler vermieden werden können.

In einer ersten Ausführungsform der erfindungsgemäßen Maschine ist die Interaktionsstelle oder eine der Interaktionsstellen eine Wartungsstelle, insbesondere ein Schmiernippel, der eingerichtet ist ein Schmiermittel aufzunehmen.

Bearbeitungsmaschinen können Schmiernippel aufweisen, die ein Schmiermittel aufnehmen und an entsprechende Stellen der Maschine weiterleiten können, die eine Schmierung erfordern. Im Rahmen von Wartungsprozessen müssen die Schmiernippel in regelmäßigen Abständen manuell mit Schmiermittel versorgt werden, um den Verschleiß zu reduzieren und ungeplante Ausfallzeiten zu vermeiden. Dafür muss der Bediener unter anderem wissen, wo, wann und wie ein Schmiermittel appliziert werden muss. Die Bereitstellung dieser Informationen direkt am Schmiernippel oder in der Nähe davon erleichtert und beschleunigt die Wartungsprozesse und stellt sicher, dass diese korrekt ausgeführt werden, wodurch der Bediener entlastet wird, und effizientere Abläufe ermöglicht, die Sicherheit und Lebenszeit der Maschine erhöht sowie ungeplante Ausfallzeiten durch Bedienfehler reduziert werden.

In der ersten Ausführungsform der erfindungsgemäßen Maschine ist die elektronische Informationsanzeige bevorzugt eingerichtet Informationen zur Wartung, insbesondere zu einer Schmierung des Schmiernippels und/oder zu einer erforderlichen Interaktion anzuzeigen.

Um die Wartungsvorgaben korrekt einzuhalten und Bedienfehler zu vermeiden, muss der Bediener, wann die letzte Schmierung erfolgte, wann die nächste Schmierung erforderlich ist sowie welche Art und Menge von Schmiermittel appliziert werden muss. Daher ist es vorteilhaft, wenn diese Informationen direkt am Schmiernippel oder in der Nähe davon in einfach verständlicher Form bereitgestellt werden.

In einer zweiten Ausführungsform der erfindungsgemäßen Maschine ist die Interaktionsstelle oder eine der Interaktionsstellen ein Werkzeugwechsler mit Werkzeugplätzen, die jeweils eingerichtet sind ein Werkzeug aufzunehmen.

Im Rahmen eines teilautomatisierten Produktionsprozesses kann es erforderlich sein, einen Werkzeugwechsler mit den dafür benötigten Werkzeugen manuell zu bestücken. Dafür muss der Bediener unter anderem wissen, welches Werkzeug sich aktuell in welchem Werkzeugplatz befindet. Die Bereitstellung dieser Informationen direkt am Werkzeugplatz oder in der Nähe davon erleichtert und beschleunigt den Bestückungsprozess und stellt sicher, dass sich die richtigen Werkzeuge in den richtigen Werkzeugplätzen befinden, wodurch der Bediener entlastet wird und effizientere Abläufe ermöglicht, die Sicherheit sowie die Lebenszeit der Maschine erhöht und ungeplante Ausfallzeiten durch Bedienfehler reduziert werden, insbesondere indem eine Kollision eines falsch eingelegten Werkzeugs mit der Maschine, dem Werkstück oder Spannmitteln vermieden wird.

In der zweiten Ausführungsform der erfindungsgemäßen Maschine ist die elektronische Informationsanzeige bevorzugt eingerichtet Informationen zum Werkzeugplatz, zum enthaltenen Werkzeug und/oder zu einer erforderlichen Interaktion anzuzeigen.

Zur Bestückung des Werkzeugwechslers muss der Bediener den Status eines Werkzeugplatzes (z.B. frei, belegt), die Art des eingelegten bzw. des einzulegenden Werkzeugs, sowie die erforderliche Interaktion (z.B. entnehmen, einlegen) kennen, um Verwechselungen, fehlerhafte Teile oder Kollisionen durch falsche Belegungen auszuschließen. Daher ist es vorteilhaft, wenn diese Informationen direkt am jeweiligen Werkzeugplatz oder in der Nähe davon in einfach verständlicher Form bereitgestellt werden.

In einer dritten Ausführungsform der erfindungsgemäßen Maschine ist die Interaktionsstelle oder eine der Interaktionsstellen die Werkstückauflage, die ferner eingerichtet ist ein Spannmittel aufzunehmen.

Im Rahmen eines teilautomatisierten Produktionsprozesses kann es ferner erforderlich sein, ein oder mehrere Spannmittel manuell auf der Werkstückauflage zu installieren, um damit ein Werkstück einzuspannen. Dafür muss der Bediener wissen, welche Spannmittel wo und wie zu installieren sind. Die Bereitstellung dieser Informationen direkt an der Werkstückauflage oder in der Nähe davon erleichtert und beschleunigt den Einspannprozess und stellt sicher, dass die richtigen Spannmittel richtig installiert werden, wodurch der Bediener entlastet, effizientere Abläufe ermöglicht, die Sicherheit sowie die Lebenszeit der Maschine erhöht und ungeplante Ausfallzeiten durch Fehlbedienung reduziert werden, insbesondere indem eine Kollision eines Werkzeugs mit einem falsch ausgewählten oder falsch installierten Spannmittel oder mit einem falsch oder nicht ausreichend eingespannten Werkstück vermieden wird.

In der dritten Ausführungsform der erfindungsgemäßen Maschine ist die elektronische Informationsanzeige bevorzugt eingerichtet Informationen zur Positionierung und/oder zur Ausrichtung des Spannmittels und/oder zu einer erforderlichen Interaktion anzuzeigen.

Zur Bestückung der Werkstückauflage mit Spannmitteln muss der Bediener unter anderem die Art und Menge der erforderlichen Spannmittel sowie deren vorgegebene Positionen und Drehwinkel auf der Werkstückauflage kennen, um ein Werkstück richtig einzuspannen und fehlerhafte Teile oder Kollisionen durch falsche oder falsch installierte Spannmittel auszuschließen. Daher ist es vorteilhaft, wenn diese Informationen direkt an der Werkstückauflage oder in der Nähe davon in einfach verständlicher Form bereitgestellt werden.

Ein erfindungsgemäßes Spannmittel zur Verwendung in einer Bearbeitungsmaschine zum Bearbeiten von Werkstücken, die bevorzugt zumindest teilweise aus Holz, Holzwerkstoffen, Kunststoff oder dergleichen bestehen, wobei die Maschine eine Werkstückauflage, die eingerichtet ist ein Werkstück und das Spannmittel aufzunehmen, und eine elektronische Steuerung aufweist, umfasst eine elektronische Informationsanzeige, die eingerichtet ist mit der elektronischen Steuerung der Maschine zu kommunizieren und insbesondere Informationen in Form von Texten und/oder Grafiken anzuzeigen.

Durch die Kommunikation mit der elektronischen Steuerung der Maschine ist die elektronische Informationsanzeige des Spannmittels in der Lage, die richtigen Informationen in der richtigen Form zur richtigen Zeit am richtigen Ort abzurufen und anzuzeigen, die für die Auswahl und Installation des Spannmittels auf der Werkstückauflage erforderlich sind. Die Bereitstellung der Informationen direkt am Spannmittel selbst erleichtert und beschleunigt den Einspannprozess und stellt sicher, dass die richtigen Spannmittel richtig installiert werden, wodurch der Bediener entlastet, effizientere Abläufe ermöglicht, die Sicherheit sowie die Lebenszeit der Maschine erhöht und ungeplante Ausfallzeiten durch Fehlbedienung reduziert werden, insbesondere indem eine Kollision eines Werkzeugs mit einem falsch ausgewählten oder falsch installierten Spannmittel oder mit einem falsch oder nicht ausreichend eingespannten Werkstück vermieden wird.

In einer ersten Ausführungsform des erfindungsgemäßen Spannmittels ist die elektronische Informationsanzeige unter einer Saugplatte angebracht, insbesondere unter einer transparenten Dichtlippe oder einer Gummiplatte mit Fenster.

Die Bereitstellung der elektronischen Informationsanzeige unter der Saugplatte des Spannmittels hat den Vorteil, dass sie für den Bediener einerseits gut sichtbar ist und andererseits gut vor äußeren Einflüssen wie Beschädigungen, Staub, Feuchtigkeit oder Ähnlichem geschützt ist. Während die Anzeige bei der Verwendung einer transparenten Saugplatte direkt darunter bereitgestellt sein kann, kann sie bei der Verwendung einer intransparenten Saugplatte in einem Fenster darin bereitgestellt und ggf. mit einer Schicht aus einem transparenten Material abgedeckt sein, um die Anzeige vor den oben genannten äußeren Einflüssen zu schützen.

In einer zweiten Ausführungsform des erfindungsgemäßen Spannmittels ist die elektronische Informationsanzeige an oder in einem Gehäuse des Spannmittels angebracht.

Die Bereitstellung der elektronischen Informationsanzeige am Gehäuse des Spannmittels hat den Vorteil, dass die Anzeige von der Seite aus sichtbar ist und auf relativ einfache Weise nachrüstbar ist.

In weiteren Ausführungsformen des erfindungsgemäßen Spannmittels ist die elektronische Informationsanzeige eingerichtet Informationen zur Positionierung und/oder zur Ausrichtung des Spannmittels und/oder zu einer erforderlichen Interaktion anzuzeigen.

Zur Bestückung der Werkstückauflage mit Spannmitteln muss der Bediener unter anderem die Art und Menge der erforderlichen Spannmittel sowie deren vorgegebene Positionen und Drehwinkel auf der Werkstückauflage kennen, um ein Werkstück richtig einzuspannen und fehlerhafte Teile oder Kollisionen durch falsche oder falsch installierte Spannmittel auszuschließen. Daher ist es vorteilhaft, wenn diese Informationen direkt am Spannmittel in einfach verständlicher Form bereitgestellt werden.

In weiteren Ausführungsformen der erfindungsgemäßen Maschine oder des erfindungsgemäßen Spannmittels ist die elektronische Informationsanzeige eingerichtet mit der elektronischen Steuerung drahtlos zu kommunizieren, insbesondere via NFC oder Bluetooth.

Durch die drahtlose Kommunikation der elektronischen Informationsanzeige einer Maschine sind keine zusätzlichen Kabel erforderlich, wodurch nicht nur Materialkosten gespart, sondern auch die Montage bzw. Demontage der Anzeige erleichtert werden. Durch die drahtlose Kommunikation der elektronischen Informationsanzeige eines Spannmittels kann die Anzeige jederzeit Informationen von der Maschine abrufen und anzeigen. Wenn ein Spannmittel beispielsweise richtig installiert wurde, kann dies auf der Anzeige des Spannmittels entsprechend angezeigt werden.

In weiteren Ausführungsformen der erfindungsgemäßen Maschine oder des erfindungsgemäßen Spannmittels weist die elektronische Informationsanzeige einen Energiespeicher oder eine Vorrichtung zur drahtlosen oder kabelgebundenen Energieübertragung auf.

Durch die drahtlose Energieversorgung der elektronischen Informationsanzeige einer Maschine sind keine zusätzlichen Kabel erforderlich, wodurch nicht nur Materialkosten gespart, sondern auch die Montage bzw. Demontage der Anzeige erleichtert werden. Durch die drahtlose Energieversorgung der elektronischen Informationsanzeige eines Spannmittels wird die Handhabung des Spannmittels wesentlich erleichtert.

In weiteren Ausführungsformen der erfindungsgemäßen Maschine oder des erfindungsgemäßen Spannmittels ist die elektronische Informationsanzeige ein Flüssigkristall-Display oder ein elektronisches Papier, das nur für eine Zustandsänderung Energie benötigt.

Flüssigkristall Displays (LCDs) und Elektronische Papier (E-Ink) Displays können sowohl Texte als auch Grafiken anzeigen. Darüber hinaus sind sie günstig und haben einen sehr geringen Energieverbrauch. E-Ink Displays benötigen sogar nur für eine Zustandsänderung Energie, so dass sie ggf. mehrere Monate oder Jahre ohne eine Energiequelle auskommen können. Aufgrund des geringen Energieverbrauch sind LCD und E-Ink Displays daher besonders geeignet für dezentrale Informationsanzeigen ohne dauerhafte externe Energieversorgung. Für die Anbringung an beweglichen Teilen wie z.B. Spannmitteln eignet sich besonders Elektronisches Papier. Zusätzlich ist es möglich diese Displays so zu bauen, dass eine Biegung möglich ist.

In weiteren Ausführungsformen der erfindungsgemäßen Maschine oder des erfindungsgemäßen Spannmittels ist die elektronische Informationsanzeige ein berührungsempfindliches Display, das manuelle Eingaben erkennen und verarbeiten kann.

Berührungsempfindliche Displays erlauben manuelle Eingaben zur informationstechnischen Interaktion des Bedieners mit der Anzeige bzw. mit der Maschine. Dadurch können manuelle Prozessschritte wie die Schmierung eines Schmiernippels, das Einlegen eines Werkzeugs in einen Werkzeugplatz oder die Installation eines Spannmittels auf der Werkstückauflage quittiert und dokumentiert werden, wodurch z.B. der nächste Prozessschritt initiiert oder eventuelle Fehler rückverfolgt werden können.

Ein erfindungsgemäße System umfasst eine erfindungsgemäße Bearbeitungsmaschine und ein erstes erfindungsgemäßes Spannmittel sowie bevorzugt ein zweites erfindungsgemäßes Spannmittel.

Die Kombination aus einer erfindungsgemäßen Maschine und ein oder mehreren erfindungsgemäßen Spannmitteln ist besonders vorteilhaft, weil dadurch die Bedienung weiter erleichtert, die Effizienz weiter gesteigert und die Fehleranfälligkeit weiter reduzieret werden können. Insbesondere die Kombination aus einer Maschine mit einer "intelligenten" Werkstückauflage und "intelligenten" Spannmitteln erleichtert die Installation der Spannmittel wesentlich.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine schematische Seitenansicht einer Ausführungsform einer erfindungsgemäßen Bearbeitungsmaschine;
- Fig. 2a: eine schematische Seitenansicht einer ersten und einer zweiten Ausführungsform eines erfindungsgemäßen Spannmittels;
- Fig. 2b: eine schematische Draufsicht der ersten Ausführungsform des erfindungsgemäßen Spannmittels;
- Fig. 2c: eine schematische Draufsicht der zweiten Ausführungsform des erfindungsgemäßen Spannmittels;
- Fig. 3: eine schematische Seitenansicht einer dritten Ausführungsform eines erfindungsgemäßen Spannmittels;

### Beschreibung der Ausführungsformen

Gleiche Bezugszeichen, die in verschiedenen Figuren aufgeführt sind, benennen identische, einander entsprechende, oder funktionell ähnliche Elemente.

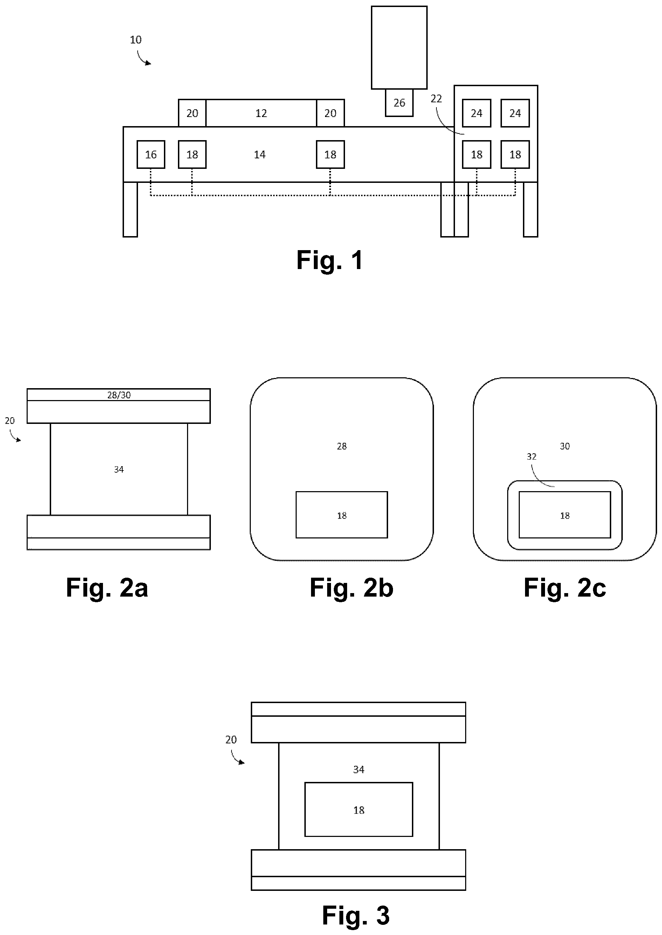

Fig. 1 zeigt eine schematische Seitenansicht einer Ausführungsform einer erfindungsgemäßen Bearbeitungsmaschine 10. Diese umfasst eine Werkstückauflage 14, auf der ein Werkstück 12 aufliegt, das zwischen zwei Spannmitteln 20 eingespannt ist, um durch ein Werkzeug 26, z.B. einen Fräser, bearbeitet zu werden. Die Maschine 10 umfasst zudem einen Werkzeugwechsler 22 mit mehreren Werkzeugplätzen 24 zur Aufnahme jeweils eines Werkzeugs 26.

Ferner umfasst die Maschine 10 eine elektronische Steuerung 16 zur Steuerung der Maschine 10 sowie mehrere elektronische Informationsanzeigen 18, die mit der elektronischen Steuerung 16 über entsprechende Kabel oder kabellos verbunden sind. Die elektronischen Informationsanzeigen 18 befinden sich dabei an Interaktionsstellen, an denen manuelle Prozessschritte erforderlich sind, die nicht lediglich der Prozessteuerung dienen (z.B. Auswahl und Starten eines automatisierten Produktionsprozesses), sondern selbst Teil eines manuellen oder teilautomatisierten Prozesses sind (z.B. Installation von Spannmitteln im Rahmen eines Produktionsprozesses oder Applikation von Schmiermittel im Rahmen eines Wartungsprozesses) .

In dieser Ausführungsform befinden sich die elektronischen Informationsanzeigen 18 an der Werkstückauflage 14 unterhalb der Spannmittel-Positionen sowie am Werkzeugwechsler 22 unterhalb der Werkzeugplätze 24. Dank der hohen Auflösung der elektronischen Informationsanzeigen 18 kann die korrekte Position der Spannmittel 20 auf der Werkstückauflage 14 mit hoher Genauigkeit angezeigt werden. Zudem können weitere Informationen wie die Ausrichtung der Spannmittel 20 als Text oder Grafik direkt vor Ort und leicht verständlich angezeigt werden. Ferner weiß der Bediener zu jeder Zeit in welchem Werkzeugplatz 24 sich welches Werkzeug 26 befindet.

Als elektronische Informationsanzeige an der Werkstückauflage eignet sich insbesondere ein langgezogenes Display, das randlos, verlängerbar und/oder steckbar ist. So sind auch Einsatzmöglichkeiten bei Darstellungsbereichen über das übliche Maß von Displaygrößen möglich.

Fig. 2a zeigt eine schematische Seitenansicht einer ersten und einer zweiten Ausführungsform eines erfindungsgemäßen Spannmittels 20. Das Spannmittel 20 umfasst dabei ein Gehäuse 34 und eine Saugplatte in Form einer transparenten Dichtlippe 28 oder einer Gummiplatte 30.

Fig. 2b zeigt eine schematische Draufsicht der ersten Ausführungsform des erfindungsgemäßen Spannmittels 20 mit einer transparenten Dichtlippe 28. Diese Ausführungsform umfasst ferner eine elektronische Informationsanzeige 18, die unter der transparenten Dichtlippe 28 angeordnet ist.

Fig. 2c zeigt eine schematische Draufsicht der zweiten Ausführungsform des erfindungsgemäßen Spannmittels 20 mit einer undurchsichtigen Gummiplatte 30. Diese Ausführungsform umfasst ferner eine elektronische Informationsanzeige 18, die in einem Fenster 32 in der Gummiplatte 30 angeordnet ist.

Fig. 3 zeigt eine schematische Seitenansicht einer dritten Ausführungsform eines erfindungsgemäßen Spannmittels 20. In dieser Ausführungsform ist die elektronische Informationsanzeige 18 seitlich am Gehäuse 34 angebracht.

Eine elektronisch unterstützte Spannmittelbestückung kann beispielsweise wie folgt ablaufen:
1. Der Maschinenbediener meldet das Spannmittel zur Verwendung in der nächsten Belegungssituation am System an.
2. Von der Platzbelegung wird per NFC/Bluetooth eine Information an das Spannmittel in Form einer Grafik oder eines Textes übergeben (z.B. "Spannmittel geeignet/benötigt", "Position/Ausrichtung (Drehwinkel) auf der Konsole"). Die Position und Ausrichtung des Spannmittels können nach wie vor durch LED-Leisten unterstützend visualisiert werden und in die am Spannmittel angezeigt Grafik einfließen. Insbesondere beim Einsatz farbiger Displays können LED-Muster oder weitere Zustände deutlich gemacht werden (z.B. "Sauger nicht verwenden da bei vorherigem Einsatz Vakuumfehler").
3. Der Bediener positioniert das Spannmittel und richtet es aus entsprechend der angezeigten Grafik am Spannmittel.

Durch die vorliegende Erfindung werden insbesondere folgende Vorteile realisiert: Die Menge der angezeigten Informationen wird erhöht, die Anzeige bleibt übersichtlich und intuitiv, die Bedienung wird vereinfacht, der Bediener wird entlastet, die Qualität und Effizienz der Abläufe werden erhöht, die Sicherheit und Lebenszeit der Maschine werden erhöht, und die Ausfallzeiten z.B. durch Fehlbedienung werden reduziert.

Für den Fachmann ist ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

### Bezugszeichen

- 10: Bearbeitungsmaschine
- 12: Werkstück
- 14: Werkstückauflage
- 16: elektronische Steuerung
- 18: elektronische Informationsanzeige
- 20: Spannmittel
- 22: Werkzeugwechsler
- 24: Werkzeugplatz
- 26: Werkzeug
- 28: transparente Dichtlippe
- 30: Gummiplatte
- 32: Fenster
- 34: Gehäuse

## Patentansprüche

1. Bearbeitungsmaschine (10) zum Bearbeiten von Werkstücken (12), die bevorzugt zumindest teilweise aus Holz, Holzwerkstoffen, Kunststoff oder dergleichen bestehen, umfassend
eine Werkstückauflage (14), die eingerichtet ist ein Werkstück (12) aufzunehmen,
eine elektronische Steuerung (16) die eingerichtet ist die Bearbeitungsmaschine (10) zu steuern,
zumindest eine elektronische Informationsanzeige (18), die eingerichtet ist mit der elektronischen Steuerung (16) zu kommunizieren und Informationen in Form von Texten und/oder Grafiken anzuzeigen, und
zumindest eine Interaktionsstelle, an der ein manueller Prozessschritt erforderlich ist,
wobei sich die elektronische Informationsanzeige (18) an oder in unmittelbarer Nähe der Interaktionsstelle befindet.

2. Bearbeitungsmaschine (10) nach Anspruch 1,
wobei die Interaktionsstelle oder eine der Interaktionsstellen eine Wartungsstelle, insbesondere ein Schmiernippel (28) ist, der eingerichtet ist ein Schmiermittel aufzunehmen.

3. Bearbeitungsmaschine (10) nach Anspruch 2,
wobei die elektronische Informationsanzeige (18) eingerichtet ist Informationen zur Wartung, insbesondere zu einer Schmierung des Schmiernippels (28) und/oder zu einer erforderlichen Interaktion anzuzeigen.

4. Bearbeitungsmaschine (10) nach einem der Ansprüche 1 bis 3,
wobei die Interaktionsstelle oder eine der Interaktionsstellen ein Werkzeugwechsler (22) mit Werkzeugplätzen (24) ist, die jeweils eingerichtet sind ein Werkzeug (26) aufzunehmen.

5. Bearbeitungsmaschine (10) nach Anspruch 4,
wobei die elektronische Informationsanzeige (18) eingerichtet ist Informationen zum Werkzeugplatz (24), zum enthaltenen Werkzeug (26) und/oder zu einer erforderlichen Interaktion anzuzeigen.

6. Bearbeitungsmaschine (10) nach einem der Ansprüche 1 bis 5,
wobei die Interaktionsstelle oder eine der Interaktionsstellen die Werkstückauflage (14) ist, die ferner eingerichtet ist ein Spannmittel (20) aufzunehmen.

7. Spannmittel (20) zur Verwendung in einer Bearbeitungsmaschine (10) zum Bearbeiten von Werkstücken (12), die bevorzugt zumindest teilweise aus Holz, Holzwerkstoffen, Kunststoff oder dergleichen bestehen,
die Bearbeitungsmaschine (10) umfassend
eine Werkstückauflage (14), die eingerichtet ist ein Werkstück (12) und das Spannmittel (20) aufzunehmen, und eine elektronische Steuerung (16),
wobei das Spannmittel (20) eine elektronische Informationsanzeige (18) umfasst, die eingerichtet ist mit der elektronischen Steuerung (16) der Bearbeitungsmaschine (10) zu kommunizieren und insbesondere Informationen in Form von Texten und/oder Grafiken anzuzeigen.

8. Spannmittel (20) nach Anspruch 7,
wobei die elektronische Informationsanzeige (18) auf einer Oberseite des Spannmittels (20) angebracht ist, vorzugsweise in oder unter einer Saugplatte, insbesondere unter einer transparenten Dichtlippe (28) oder einer Gummiplatte (30) mit Fenster (32).

9. Spannmittel (20) nach Anspruch 7,
wobei die elektronische Informationsanzeige (18) an oder in einem Gehäuse (34) des Spannmittels (20) angebracht ist.

10. Bearbeitungsmaschine (10) nach Anspruch 6 oder Spannmittel (20) nach einem der Ansprüche 7 bis 9,
wobei die elektronische Informationsanzeige (18) eingerichtet ist Informationen zur Positionierung und/oder zur Ausrichtung des Spannmittels (20) und/oder zu einer erforderlichen Interaktion anzuzeigen.

11. Bearbeitungsmaschine (10) nach einem der Ansprüche 1 bis 6 oder 10 oder Spannmittel (20) nach einem der Ansprüche 7 bis 10,
wobei die elektronische Informationsanzeige (18) eingerichtet ist mit der elektronischen Steuerung (16) drahtlos zu kommunizieren, insbesondere via NFC oder Bluetooth.

12. Bearbeitungsmaschine (10) nach einem der Ansprüche 1 bis 6 oder 10 bis 11 oder Spannmittel (20) nach einem der Ansprüche 7 bis 11,
wobei die elektronische Informationsanzeige (18) einen Energiespeicher oder eine Vorrichtung zur drahtlosen oder kabelgebundenen Energieübertragung aufweist.

13. Bearbeitungsmaschine (10) nach einem der Ansprüche 1 bis 6 oder 10 bis 12 oder Spannmittel (20) nach einem der Ansprüche 7 bis 12,
wobei die elektronische Informationsanzeige (18) ein Flüssigkristall-Display ist oder ein elektronisches Papier ist, das nur für eine Zustandsänderung Energie benötigt.

14. Bearbeitungsmaschine (10) nach einem der Ansprüche 1 bis 6 oder 10 bis 13 oder Spannmittel (20) nach einem der Ansprüche 7 bis 13,
wobei die elektronische Informationsanzeige (18) ein berührungsempfindliches Display ist, das manuelle Eingaben erkennen und verarbeiten kann.

15. System, umfassend die Bearbeitungsmaschine (10) nach einem der Ansprüche 1 bis 6 oder 10 bis 14 und ein erstes Spannmittel (20) nach einem der Ansprüche 7 bis 14 sowie bevorzugt ein zweites Spannmittel (20) nach einem der Ansprüche 7 bis 14.
